(19) Europäisches Patentamt / European Patent Office / Office européen des brevets

(11) **EP 3 889 518 B1**

(12) **EUROPEAN PATENT SPECIFICATION**

(45) Date of publication and mention
of the grant of the patent:
**01.03.2023  Bulletin 2023/09**

(21) Application number: **19888387.8**

(22) Date of filing: **19.02.2019**

(51) International Patent Classification (IPC):
**F24H 9/20** *(2006.01)*

(52) Cooperative Patent Classification (CPC):
**F24H 9/007; F25B 49/022;** F25B 30/02;
F25B 2500/19; F25B 2600/0253; F25B 2700/2116;
F25B 2700/2117; Y02B 30/70

(86) International application number:
**PCT/CN2019/075436**

(87) International publication number:
**WO 2020/107721 (04.06.2020 Gazette 2020/23)**

(54) **CONTROL METHOD FOR HEAT-PUMP WATER HEATER**

STEUERUNGSVERFAHREN FÜR WÄRMEPUMPENWASSERERHITZER

PROCÉDÉ DE COMMANDE POUR CHAUFFE-EAU À POMPE À CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2018  CN 201811446960**

(43) Date of publication of application:
**06.10.2021  Bulletin 2021/40**

(73) Proprietors:
• **Qingdao Economic and Technological
Development
Zone Haier Water Heater Co., Ltd.
Qingdao, Shangdong 266101 (CN)**
• **Qingdao Haier New Energy Appliance Co.Ltd
Qingdao, Shandong 266100 (CN)**
• **Haier Smart Home Co., Ltd.
Qingdao, Shandong 266101 (CN)**

(72) Inventors:
• **HUANG, Juan**
  **Qingdao, Shandong 266101 (CN)**
• **TIAN, Jincheng**
  **Qingdao, Shandong 266101 (CN)**
• **YANG, Lei**
  **Qingdao, Shandong 266101 (CN)**
• **LI, Bo**
  **Qingdao, Shandong 266101 (CN)**

(74) Representative: **Høiberg P/S
Adelgade 12
1304 Copenhagen K (DK)**

(56) References cited:
**EP-A1- 2 009 370      CN-A- 106 940 075
CN-B- 104 613 651**

## Description

## Technical field

The invention relates to the technical field of water heater, in particular to a control method for heat-pump water heater and a heat-pump water heater.

## Background

For an inverter air source heat pump in the prior art, the compressor only operates at a given frequency according to varied water temperature and ambient temperature. But for a statistic heating type air source heat pump, the evaporation temperature and the condensing temperature are constantly changing in the course of a heating operation, the compressor therein could not operates at an optimal frequency in real time under a typical control pattern due to the fact that it leads to energy waste.

CN 104 613 651 discloses a frequency adjustment method of a variable-frequency heat-pump water heater.

## Summary of the invention

In order to solve the technical problem of the existing heat pump water heater that the evaporation temperature and the condensing temperature are constantly changing in the course of a heating operation, the compressor therein could not operates at an optimal frequency in real time under a typical control pattern due to the fact that it leads to energy waste. A control method for heat pump water heater is provided, which could solve the above problems.

In order to solve the above technical problems, the present invention adopts the following technical solutions to achieve:

a control method for a heat pump water heater according to claim 1.

The control method further includes a step to calculate the second derivative of the energy efficiency ratio formula between the Step (12) and the Step (13) and a step to determine whether the second derivative value is less than 0; if the second derivative value is less than 0, performing Step (13).

Further the energy efficiency ratio formula is:

$$\text{COP(f)} = u \cdot e^{10^{-4} \cdot [(aTc^2 + b \cdot Tc + c) \cdot Te - dTc)]} f^2 + v \cdot f + w \cdot e^{10^{-4} \cdot [(aTc^2 + b \cdot Tc + c) \cdot Te - dTc)]}$$

wherein $u, v, w, \alpha, b, c, d$ are constant coefficients, $f$ represents the compressor operating frequency, $Te$ represents the evaporating temperature and $Tc$ represents the condensing temperature.

Further the optimal operating frequency formula is:

$$\text{fopt} = -\frac{v}{2u} \cdot e^{10^{-4} \cdot [dTc - (aTc^2 + b \cdot Tc + c) \cdot Te)]},$$

The control method further includes a step to write the optimal operating frequency formula into a control program of heat pump water heater after the fitting calculation; when the heat pump water heater is turned on, the optimal operating frequency formula is automatically called to calculate the optimal operating frequency.

Further the evaporating temperature and the condensing temperature is step (21) is directly detected or be calculated indirectly.

Compared with the prior art, the advantages and positive effects of the present invention are: with the heat pump water heater control method of the present embodiment the fitting maximum energy efficiency ratio of the unit compressor as the water is heated to a preset temperature could be used as the maximum energy efficiency ratio of the heat pump water heater without considering other parameters concerning time or heating power, thereby simplifying the calculation formula and reducing a calculation burden. In the meanwhile, optimal energy efficiency ratios as water being heated to different preset temperatures could be maintained, which is beneficial to reducing energy consumption.

After reading the detailed description of the embodiments of the present invention in conjunction with the accompanying drawings, other features and advantages of the present invention will become clearer.

## Description of the drawings

In order to explain the embodiments of the present invention or the technical solutions in the prior art more clearly, the following will briefly introduce the drawings that need to be used in the description of the embodiments or the prior art.

Fig. 1 is shows a variation curve of unit efficiency of compressor with compressor operating frequency when a control method for heat-pump water heater according to one aspect of the present invention operates.

Fig. 2 is a flow chart of a control method for heat-pump water heater according to one aspect of the present invention.

## Detailed description of the present invention

The technical solutions in the embodiments of the present invention will be clearly and completely described below in conjunction with the accompanying drawings in the embodiments of the present invention. Obviously, the described embodiments are only a part of the embodiments of the present invention, rather than all the embodiments.

Example One:

Power-consuming components in an air source heat pump water heater comprise a compressor, one or more fans and one or more circuit boards: power consumption of the circuit boards is fixed; how much power the fans is using is in accordance with the compressor frequency as running so the power consumption of fan is also stable under the condition that the compressor frequency is in a certain range; the compressor is the core of the air source heat pump water heater so the efficiency of the air source heat pump water heater depends on the compressor frequency.

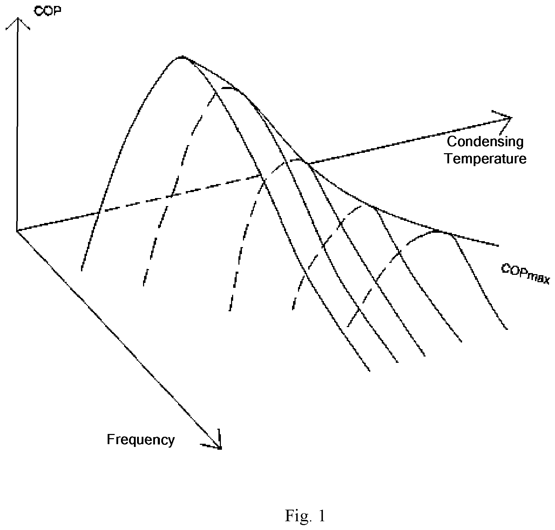

Provided that evaporating temperature and condensing temperature are determined, the compressor frequency increases first and then decreases as the frequency changes, and its efficiency has a maximum value, as shown in Fig 1; wherein the COP (energy efficiency ratio) maximizes when the compressor is running at a frequency Fopt. Hence, according to a group of maximum COPs obtained on the basis of a same evaporating temperature and varied condensing temperatures, a theoretical optimal COP curve based on COPmax could be constituted. Heat pump water heater is different from heat-pump type air conditioner because the air conditioner has a higher requirement on the time it takes to work, that is to say the air conditioner is required to enable ambient temperature to reach to a target temperature within a predetermined time in cooling mode or heating mode to satisfy user's physical requirements, and additionally it requires to integrate other factors such as heating capacity and power requirements; but for a heat pump water heater, especially for a statistic heating heat pump water heater, it is allowed to heat the water at a much slower pace. Therefore due to the fact that the compressor is the main energy-consuming component, the maximum energy efficiency ratio of the heat pump water heater could be determined as the unit energy efficiency ratio of the compressor maximizes in the midst of a process when the water is heated to a preset temperature without considering other parameters concerning time or heating power. These arrangements could simplify a calculation formula and also could reduce a calculation burden.

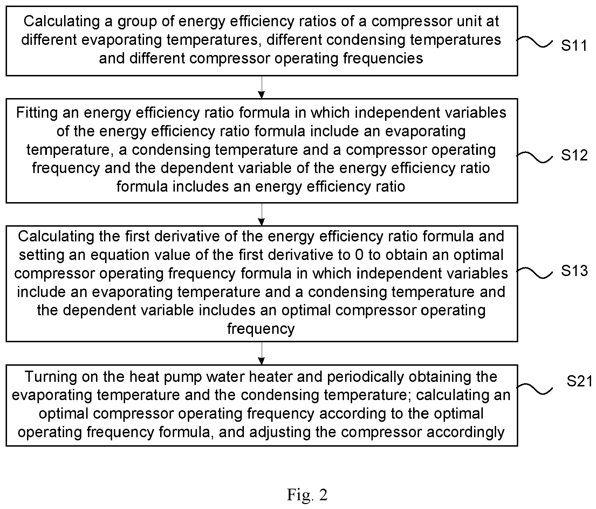

Based on the process explained above, a heat pump water heater control method is provided, which is shown in Fig. 2.

A fitting calculation includes the following steps:

S11: Calculating a group of energy efficiency ratios of a compressor unit at different evaporating temperatures, different condensing temperatures and different compressor operating frequencies; the calculation of Step S11 could be done in a laboratory where a group of energy efficiency ratios of a compressor unit at different evaporating temperatures, different condensing temperatures and different compressor operating frequencies could be tested. In theory, the more data samples tested, the more they reflect the variation of the energy efficiency ratio.

S12: Fitting an energy efficiency ratio formula in which independent variables of the energy efficiency ratio formula include an evaporating temperature, a condensing temperature and a compressor operating frequency and the dependent variable of the energy efficiency ratio formula includes an energy efficiency ratio; the energy efficiency ratio formula is fitted according to the energy efficiency ratios of the compressor unit at different evaporating temperatures, condensing temperatures and compressor operating frequencies, which are obtained in Step S11.

S13: Calculating the first derivative of the energy efficiency ratio formula and setting an equation value of the first derivative to 0 so as to obtain an optimal compressor operating frequency formula in which independent variables include an evaporating temperature and a condensing temperature and the dependent variable includes an optimal compressor operating frequency; as shown in Fig.1, the curve of the energy efficiency ratio formula is parabolic, and when the first derivative of the energy efficiency ratio formula is 0, a maximum value is obtained. Therefore the optimal compressor operating frequency formula for fopt could be obtained.

Because the independent variables of the optimal compressor operating frequency formula for fopt include the evaporating temperature and the condensing temperature, when the heat pump water heater is turned on, only the evaporating temperature and condensing temperature need to be periodically detected and the optimal operating frequency of the compressor corresponding to the optimal energy efficiency ratio under a real-time operating condition could be calculated by substituting the detected evaporating temperature and condensing temperature into the optimal compressor operating frequency formula.

Further a startup step includes:

S21: turning on the heat pump water heater and periodically obtaining the evaporating temperature and the condensing temperature; calculating an optimal compressor operating frequency according to the optimal operating frequency formula, and adjusting the compressor accordingly. With the heat pump water heater control method of the present embodiment the fitting maximum energy efficiency ratio of the unit compressor as the water is heated to a preset temperature could be used as the maximum energy efficiency ratio of the heat pump water heater without considering other parameters concerning time or heating power, thereby simplifying the calculation formula and reducing a calculation burden. In the meanwhile, optimal energy efficiency ratios as water being heated to different preset temperatures could be maintained, which is beneficial to reducing energy consumption.

As a preferred embodiment, in order to prevent a situation that another curve different from the fitted energy efficiency ratio formula curve shown in Fig. 1 in which no maximum value could be determined or a plurality of maximum values could be determined, from being obtained, which may lead in a failure of the present invention, a step to calculate the second derivative of the energy efficiency ratio formula is added into between the Step S12 and Step 13, namely before the calculation of the optimal compressor operating frequency formula. Further a step to determine whether the second derivative value is less than 0 is also added into. If the second derivative value is less than 0, the Step 13 is performed. Normally the second derivative of the energy efficiency ratio formula corresponding to the curve shown in Fig. 1 is less than 0, and accordingly if the second derivative value does not satisfy the condition that the second derivative value is less than 0, it means that a situation that another curve different from the fitted energy efficiency ratio formula curve shown in Fig. 1 in which no maximum value could be determined or a plurality of maximum values could be determined, is obtained, which may lead in a failure of the control method provided by the present invention and should be eliminated so as to avoid control failures.

As a preferred embodiment, the energy efficiency ratio formula in the present invention is:

$$\mathrm{COP}(f) = u \cdot e^{10^{-4} \cdot [(aTc^2 + b \cdot Tc + c) \cdot Te - dTc)]} f^2 + v \cdot f + w \cdot e^{10^{-4} \cdot [(aTc^2 + b \cdot Tc + c) \cdot Te - dTc)]}$$

Wherein **u, v, w, α, b, c, d** are constant coefficients, **f** represents the compressor operating frequency, **Te** represents the evaporating temperature and **Tc** represents the condensing temperature. It could be seen from the above explanation that the energy efficiency ratio formula reflects a relation among the energy efficiency ratio of the unit compressor, the evaporating temperature and condensing temperature. With the present embodiment, the maximum energy efficiency ratio of the unit compressor as the water is heated to a preset temperature could be obtained and further used as the maximum energy efficiency ratio of the heat pump water heater without considering other parameters of time or heating power, thereby simplifying the calculation formula and reducing the calculation burden. The parameters required for calculation only include an evaporating temperature and a condensing temperature, which are easy to obtain.

The present invention is especially suitable for a heating control process for heat pump water heater. The heat pump water heater could be any from static heating heat pump water heater, a direct heating heat pump water heater or a circulating heat pump water heater.

In addition, if the energy efficiency ratio formula is set to 0, the optimal operating frequency formula is:

$$\mathrm{fopt} = -\frac{v}{2u} \cdot e^{10^{-4} \cdot [dTc - (aTc^2 + b \cdot Tc + c) \cdot Te)]}$$

After the fitting calculation, the control method further includes a step to write the above-mentioned optimal operating frequency formula into a control program of heat pump water heater. When the heat pump water heater is turned on, the optimal operating frequency formula is automatically called so that obtained evaporating temperature and condensing temperature could be entered to calculate the optimal operating frequency, and the operating frequency of the compressor could be adjusted in accordance with the calculated optimal operating frequency on the basis of the detected evaporating temperature and condensing temperature. The preset water temperature could be set as required, and with these arrangements, the heat pump water heater could maintain at the optimal energy efficiency ratio as the water being heated to any preset water temperature, which is beneficial to saving energy.

Wherein either of the evaporating temperature *Te* and the condensing temperature *Tc* could be detected by a temperature sensor or be calculated indirectly.

As an alternative method if the temperature sensors configured to detect the evaporating temperature *Te* and the condensing temperature *Tc* fails, a method to calculate the evaporating temperature *Te* and the condensing temperature *Tc* is provided in the present embodiment:

detecting an ambient temperature *Tx* and a water temperature *Tw*, and calculating the evaporating temperature *Te* and condensing temperature *Tc* respectively, wherein,

$$Te = 0.7049 \cdot Tx - 1.8738;$$

$$Tc = -5.66 \cdot \ln(Tw) + 30.352;$$

the water temperature *Tw* is the temperature of the water in a water tank and the constant coefficients are obtained based on experience.

Example two

The present embodiment proposes a heat pump water heater including a water tank (not shown in the figures) and a heat pump system, in which the heat pump water heater control method described in the example one is performed. The heat pump system could be an air source heat pump or a solar heat pump. There is no limitation here. The principle of the heat pump system is to heat water stored in the water tank by energy absorbed from air or sunlight as driving refrigerant circulate by the compressor. The heat pump water heater control method could be referred to the Example one which will not be repeated further. With the heat pump water heater control method, the maximum energy efficiency ratio of the unit compressor as the water is heated to a preset temperature could be obtained and used as the maximum energy efficiency ratio of the heat pump water heater without considering other parameters concerning time or heating power, thereby simplifying the calculation formula and reducing the calculation burden. The parameters required for calculation only include an evaporating temperature and a condensing temperature, which are easy to obtain.

The heat pump water heater could be any from a static heating heat pump water heater, a direct heating heat pump water heater, or a circulating heat pump water heater.

The water tank has a water inlet and a water outlet. Preferably, the water inlet is opened at the bottom of the water tank, and the water outlet is opened on the top of the water tank. The water replenishment pressure of the water inlet could form a water side forced flow force without increasing the power device, which improves the heat exchange performance between the refrigerant and water and the heat exchange efficiency of the heat pump water heater is greatly improved.

**Claims**

1. A control method for a heat pump water heater, wherein the method includes:

a fitting calculation including:

(11) calculating a group of energy efficiency ratios of a compressor unit at different evaporating temperatures, different condensing temperatures and different compressor operating frequencies;
(12) fitting an energy efficiency ratio formula in which independent variables of the energy efficiency ratio formula include an evaporating temperature, a condensing temperature and a compressor operating frequency and the dependent variable of the energy efficiency ratio formula includes an energy efficiency ratio;
(13) calculating the first derivative of the energy efficiency ratio formula and setting an equation value of the first derivative to 0 to obtain an optimal compressor operating frequency formula in which independent variables include an evaporating temperature and a condensing temperature and the dependent variable includes an optimal compressor operating frequency;

and a startup step including:
(21) turning on the heat pump water heater and periodically obtaining the evaporating temperature and the condensing temperature; calculating an optimal compressor operating frequency according to the optimal operating frequency formula, and adjusting the compressor accordingly.

**2.** The control method for heat pump water heater of claim 1, **characterized in that** further includes a step to calculate the second derivative of the energy efficiency ratio formula between the Step (12) and the Step (13) and a step to determine whether the second derivative value is less than 0; if the second derivative value is less than 0, performing Step (13).

**3.** The control method for heat pump water heater of claim 1, **characterized in that** the energy efficiency ratio formula is:

$$\text{COP(f)} = u \cdot e^{10^{-4} \cdot \left[\left(aTc^2 + b \cdot Tc + c\right) \cdot Te - dTc\right]} f^2 + v \cdot f + w \cdot e^{10^{-4} \cdot \left[\left(aTc^2 + b \cdot Tc + c\right) \cdot Te - dTc\right]}$$

wherein *u, v, w,* $\alpha$*, b, c, d* are constant coefficients, *f* represents the compressor operating frequency, *Te* represents the evaporating temperature and *Tc* represents the condensing temperature.

**4.** The control method for heat pump water heater of claim 3, **characterized in that** the optimal operating frequency formula is:

$$\text{fopt} = -\frac{v}{2u} \cdot e^{10^{-4} \cdot \left[dTc - \left(aTc^2 + b \cdot Tc + c\right) \cdot Te\right]},$$

**5.** The control method for heat pump water heater of any one of claim 1 to 4, **characterized in that** further includes a step to write the optimal operating frequency formula into a control program of heat pump water heater after the fitting calculation; when the heat pump water heater is turned on, the optimal operating frequency formula is automatically called to calculate the optimal operating frequency.

**6.** The control method for heat pump water heater of any one of claim 1 to 4, **characterized in that** the evaporating temperature and the condensing temperature is step (21) is directly detected or be calculated indirectly.

**Patentansprüche**

**1.** Steuerungsverfahren für einen Wärmepumpenwassererhitzer, wobei das Verfahren Folgendes beinhaltet:

eine Anpassungsrechnung, beinhaltend:

(11) Berechnen einer Gruppe von Energieeffizienzverhältnissen einer Kompressoreinheit bei unterschiedlichen Verdampfungstemperaturen, unterschiedlichen Kondensationstemperaturen und unterschiedlichen Betriebsfrequenzen des Kompressors;
(12) Anpassen einer Formel für das Energieeffizienzverhältnis, in der unabhängige Variablen der Formel für das Energieeffizienzverhältnis eine Verdampfungstemperatur, eine Kondensationstemperatur und eine Betriebsfrequenz des Kompressors beinhalten und die abhängige Variable der Formel für das Energieeffizienzverhältnis ein Energieeffizienzverhältnis beinhaltet;
(13) Berechnen der ersten Ableitung der Formel für das Energieeffizienzverhältnis und Setzen eines Werts der Gleichung der ersten Ableitung gleich 0, um eine Formel für die optimale Betriebsfrequenz des Kompressors zu erhalten, in der unabhängige Variablen eine Verdampfungstemperatur und eine Kondensationstemperatur beinhalten und die abhängige Variable eine optimale Betriebsfrequenz des Kompressors beinhaltet;

und einen Schritt zur Inbetriebnahme, der Folgendes beinhaltet:
(21) Einschalten des Wärmepumpenwassererhitzers und periodisches Erhalten der Verdampfungstemperatur und der Kondensationstemperatur; Berechnen einer optimalen Betriebsfrequenz des Kompressors gemäß der Formel für die optimale Betriebsfrequenz und entsprechendes Einstellen des Kompressors.

**2.** Steuerungsverfahren für Wärmepumpenwassererhitzer nach Anspruch 1, **dadurch gekennzeichnet, dass** es ferner einen Schritt zum Berechnen der zweiten Ableitung der Formel für das Energieeffizienzverhältnis zwischen dem Schritt (12) und dem Schritt (13) und einen Schritt zum Bestimmen, ob der Wert der zweiten Ableitung kleiner 0 ist, beinhaltet; wenn der Wert der zweiten Ableitung kleiner 0 ist, Durchführen von Schritt (13).

3. Steuerungsverfahren für Wärmepumpenwassererhitzer nach Anspruch 1, **dadurch gekennzeichnet, dass** die Formel für das Energieeffizienzverhältnis lautet:

$$\text{COP}(f) = u \cdot e^{10^{-4} \cdot [(aTc^2 + b \cdot Tc + c) \cdot Te - dTc)]} f^2 + v \cdot f + w \cdot e^{10^{-4} \cdot [(aTc^2 + b \cdot Tc + c) \cdot Te - dTc)]}$$

wobei **u, v, w, a, b, c, d** konstante Koeffizienten sind, **f** die Betriebsfrequenz des Kompressors darstellt, **Te** die Verdampfungstemperatur darstellt und **Tc** die Kondensationstemperatur darstellt.

4. Steuerungsverfahren für Wärmepumpenwassererhitzer nach Anspruch 3, **dadurch gekennzeichnet, dass** die Formel für die optimale Betriebsfrequenz lautet:

$$\text{fopt} = -\frac{v}{2u} \cdot e^{10^{-4} \cdot [dTc - (aTc^2 + b \cdot Tc + c) \cdot Te)]}$$

5. Steuerungsverfahren für Wärmepumpenwassererhitzer nach einem der Ansprüche 1 bis 4, **dadurch gekennzeichnet, dass** es ferner einen Schritt des Schreibens der Formel für die optimale Betriebsfrequenz in ein Steuerprogramm des Wärmepumpenwassererhitzers nach der Anpassungsrechnung beinhaltet; wenn der Wärmepumpenwassererhitzer eingeschaltet wird, wird automatisch die Formel für die optimale Betriebsfrequenz aufgerufen, um die optimale Betriebsfrequenz zu berechnen.

6. Steuerungsverfahren für Wärmepumpenwassererhitzer nach einem der Ansprüche 1 bis 4, **dadurch gekennzeichnet, dass** die Verdampfungstemperatur und die Kondensationstemperatur in Schritt (21) direkt erfasst oder indirekt berechnet werden.

## Revendications

1. Procédé de commande pour un chauffe-eau à pompe à chaleur, dans lequel le procédé comporte :

   un calcul d'ajustement comportant :

   (11) le calcul d'un groupe de rapports d'efficacité énergétique d'une unité de compresseur à différentes températures d'évaporation, différentes températures de condensation et différentes fréquences de fonctionnement du compresseur ;
   (12) l'ajustement d'une formule de rapport d'efficacité énergétique dans laquelle les variables indépendantes de la formule de rapport d'efficacité énergétique comportent une température d'évaporation, une température de condensation et une fréquence de fonctionnement de compresseur et la variable dépendante de la formule de rapport d'efficacité énergétique comporte un rapport d'efficacité énergétique ;
   (13) le calcul de la dérivée première de la formule de rapport d'efficacité énergétique et la fixation d'une valeur d'équation de la dérivée première à 0 pour obtenir une formule de fréquence de fonctionnement optimal du compresseur dans laquelle les variables indépendantes comportent une température d'évaporation et une température de condensation et la variable dépendante comporte une fréquence de fonctionnement optimal du compresseur ;

   et une étape de démarrage comportant :
   (21) la mise en marche du chauffe-eau à pompe à chaleur et l'obtention périodique de la température d'évaporation et de la température de condensation ; le calcul d'une fréquence de fonctionnement optimal de compresseur selon la formule de fréquence de fonctionnement optimale, et le réglage du compresseur en conséquence.

2. Procédé de commande pour un chauffe-eau à pompe à chaleur selon la revendication 1, **caractérisé en ce qu'il** comporte en outre une étape pour calculer la dérivée seconde de la formule de rapport d'efficacité énergétique entre l'étape (12) et l'étape (13) et une étape pour déterminer si la valeur de la dérivée seconde est inférieure à 0 ; si la valeur de la dérivée seconde est inférieure à 0, exécuter l'étape (13).

3. Procédé de commande pour un chauffe-eau à pompe à chaleur selon la revendication 1, **caractérisé en ce que** la formule de rapport d'efficacité énergétique est :

$$\text{COP(f)} = u \cdot e^{10^{-4} \cdot [(aTc^2 + b \cdot Tc + c) \cdot Te - dTc)]} f^2 + v \cdot f + w \cdot e^{10^{-4} \cdot [(aTc^2 + b \cdot Tc + c) \cdot Te - dTc)]}$$

dans laquelle **u, v, w, a, b, c, d** sont des coefficients constants, **f** représente la fréquence de fonctionnement du compresseu**r**, *Te* représente la température d'évaporation et *Tc* représente la température de condensation.

4. Procédé de commande pour un chauffe-eau à pompe à chaleur selon la revendication 3, **caractérisé en ce que** la formule de fréquence de fonctionnement optimale est :

$$\text{fopt} = -\frac{v}{2u} \cdot e^{10^{-4} \cdot [dTc - (aTc^2 + b \cdot Tc + c) \cdot Te)]}$$

5. Procédé de commande pour un chauffe-eau à pompe à chaleur selon l'une quelconque des revendications 1 à 4, **caractérisé en ce qu'**il comporte en outre une étape d'écriture de la formule de fréquence de fonctionnement optimale dans un programme de commande de chauffe-eau à pompe à chaleur après le calcul d'ajustement ; lorsque le chauffe-eau à pompe à chaleur est mis en marche, la formule de fréquence de fonctionnement optimale est automatiquement appelée pour calculer la fréquence de fonctionnement optimale.

6. Procédé de commande pour un chauffe-eau à pompe à chaleur selon l'une quelconque des revendications 1 à 4, **caractérisé en ce que** la température d'évaporation et la température de condensation à l'étape (21) sont directement détectées ou sont calculées indirectement.

Fig. 1

Calculating a group of energy efficiency ratios of a compressor unit at different evaporating temperatures, different condensing temperatures and different compressor operating frequencies ⟋ S11

Fitting an energy efficiency ratio formula in which independent variables of the energy efficiency ratio formula include an evaporating temperature, a condensing temperature and a compressor operating frequency and the dependent variable of the energy efficiency ratio formula includes an energy efficiency ratio ⟋ S12

Calculating the first derivative of the energy efficiency ratio formula and setting an equation value of the first derivative to 0 to obtain an optimal compressor operating frequency formula in which independent variables include an evaporating temperature and a condensing temperature and the dependent variable includes an optimal compressor operating frequency ⟋ S13

Turning on the heat pump water heater and periodically obtaining the evaporating temperature and the condensing temperature; calculating an optimal compressor operating frequency according to the optimal operating frequency formula, and adjusting the compressor accordingly ⟋ S21

Fig. 2

**EP 3 889 518 B1**

## REFERENCES CITED IN THE DESCRIPTION

### Patent documents cited in the description

- CN 104613651